# EUROPEAN PATENT APPLICATION

(11) **EP 2 833 212 A1**
(43) Date of publication of application: **04.02.2015**
(21) Application number: 13767283.8
(22) Date of filing: 22.03.2013
(51) Int. Cl.: G03G 15/00

(54) **IDENTIFICATION METHOD FOR PAPER DISCHARGING MODULE, PAPER DISCHARGING MODULE, PRINTER, AND PRINTING SYSTEM**

(30) Priority: 30.03.2012 CN 201210090946
(71) Applicant: Shandong New Beiyang Information Technology Co., Ltd., Weihai, Shandong 264203 (CN)
(72) Inventor: WANG, Chuntao, Shandong Province (CN); XIANG, Kaiyi, Shandong Province (CN); WANG, Xinping, Shandong Province (CN); Liu, Bingqing, Shandong Province (CN); XU, Jiabo, Shandong Province (CN)
(74) Representative: Zacco GmbH
(86) International application number: PCT/CN2013/073067
(87) International publication number: WO 2013/143418

(57) **Abstract**

The invention discloses a method for identifying a paper discharging device, a paper discharging device, a printer and a printing system. Wherein the method for identifying the paper discharging device includes: acquiring an identification signal by a printer, wherein the identification signal is a signal corresponding to the paper discharging device, wherein different paper discharging device corresponds to different identification signal; and judging a type of the paper discharging device according to the identification signal by the printer, wherein the corresponding relation between the identification signal and the type of the paper discharging device is stored in the printer. According to the invention, the problem that the printer may not automatically identify the paper discharging device type in the relevant technology is solved.

## Description

The application claims priority to the Chinese inventions submitted to the State Intellectual Property Office of P. R. China on March 30^{th}, 2012, with its application number of 201210090946.2, its title being "Method for identifying paper discharging device, paper discharging device, printer and printing system", whose disclosure are all combined as reference in this invention.

### Technical field of the invention

The invention relates to the field of printers, in particular to a method for identifying a paper discharging device, a paper discharging device, a printer and a printing system.

### Background of the invention

In recent years, with the wider and wider application of the printer, application requirements on printers are gradually diversified. The printer is provided with different paper discharging devices, such as a Presenter (PRE) configured to temporarily store printing paper before printing is finished so as to avoid equipment failure caused by the fact that a user drags a printing document in a printing process; a Paper Containing device (Bundler) configured to temporarily store multiple pieces of printing paper before batch printing is finished and deliver the multiple pieces of printing paper after batch printing is finished; and a Paper Blocking Detection device configured to detect whether paper dragging or paper blocking happens in a paper discharging process of the printer, in order to meet demands of different users. The printer sets corresponding printing control programs according to configured types of the paper discharging device.

The inventor finds that the printer may not automatically identify the types of the paper discharging device in a relevant technology; therefore, when the printer is configured with different paper discharging devices, it is required to be connected with a computer, and then the types of the paper discharging device are manually set through a software program in the computer; in addition, the printer is installed with the printing control programs corresponding to the types of the paper discharging device, and the problem of inconvenience in operation occurs.

For the problem that the printer may not automatically identify the type of the paper discharging device in the relevant technology, no effective solution is provided at present.

### Summary of the invention

The invention mainly aims at providing a method for identifying a paper discharging device, a paper discharging device, a printer and a printing system, so as to solve the problem that the printer may not automatically identify the type of the paper discharging device in the relevant technology.

In order to realize the purpose above, an embodiment of the invention provides the method for identifying the paper discharging device, including: acquiring an identification signal by a printer, wherein the identification signal is a signal corresponding to the paper discharging device, and different paper discharging device corresponds to different identification signal; and judging a type of the paper discharging device according to the identification signal by the printer, wherein the corresponding relation between the identification signal and the type of the paper discharging devices is stored in the printer.

Furthermore, the step of acquiring the identification signal by the printer, includes: receiving the identification signal by the printer, wherein the identification signal is a signal from the paper discharging device, and different paper discharging device may output different identification signal, or detecting the paper discharging device to generate the identification signal by the printer, wherein the identification signals generated by detecting different paper discharging devices by the printer are different.

Furthermore, before the printer receives the identification signal, the method for identifying the paper discharging device further includes: detecting its own parameter by the paper discharging device, and outputting an identification signal corresponding to the parameter, wherein different paper discharging device may output different identification signal.

Furthermore, corresponding relations between a plurality of identification signals and a plurality of paper discharging devices are stored in the printer, and the step of judging the type of the paper discharging device according to the identification signal by the printer includes: searching the type of paper discharging device corresponding to the identification signal by the printer to determine the type of the paper discharging device.

Furthermore, after the printer judges the type of the paper discharging device according to the identification signal, the method for identifying the paper discharging device further includes: executing the printer control program corresponding to the type of the paper discharging device by the printer, wherein the corresponding relation between the type of the paper discharging device and the printer control program is stored in the printer.

In order to realize the purpose above, another embodiment of the invention provides another method for identifying the paper discharging device, including: detecting its own parameter by the paper discharging device, and outputting an identification signal corresponding to the parameter to a printer, so that the printer may judge a type of the paper discharging device according to the identification signal, wherein different paper discharging device may output different identification signal.

Furthermore, a detection resistor is arranged in the paper discharging device, wherein detecting its own parameter by the paper discharging device includes: detecting the resistance value of a detection resistor by the paper discharging device, wherein detection resistors with different resistance values are arranged in different types of the paper discharging devices; outputting the identification signal corresponding to the parameter by the paper discharging device includes: outputting the identification signal corresponding to the resistance value of the detection resistor by the paper discharging device.

In order to achieve the above purpose, another embodiment of the invention provides a printer, including: an acquisition element for acquiring an identification signal and a judgment element for judging a type of the paper discharging device according to the identification signal, wherein the identification signal is a signal corresponding to the paper discharging device, and different paper discharging device corresponds to different identification signal, wherein the corresponding relations between the identification signals and the types of the paper discharging devices are stored in the printer.

Furthermore, the acquisition element includes: a receiving unit for receiving the identification signal, wherein the identification signal is a signal from the paper discharging device, and different paper discharging device may output different identification signal, or a detection unit for detecting the paper discharging device to generate an identification signal, wherein the identification signals generated by detecting different paper discharging devices by the printer are different.

Furthermore, corresponding relations between a plurality of identification signals and a plurality of paper discharging devices are stored in the printer, and the judgment element is configured to search the paper discharging device type corresponding to the identification signal to determine the type of the paper discharging device.

Furthermore, the printer further includes: an execution element for executing a printer control program corresponding to the type of the paper discharging device, wherein the corresponding relation between the type of the paper discharging device and the printer control program is stored in the printer.

In order to realize the purpose above, another embodiment of the invention provides a paper discharging device, including: a detection unit for detecting its own parameter, and an output unit for outputting an identification signal corresponding to the parameter to a printer, so that the printer may judge a type of the paper discharging device according to the identification signal, wherein different paper discharging device corresponds to different identification signal.

Furthermore, a detection resistor is arranged in the paper discharging device, wherein the detection unit is used for detecting the resistance value of the detection resistor, wherein detection resistors with different resistance values are arranged in different types of the paper discharging devices, and the output unit is used for outputting the identification signal corresponding to the resistance value of the detection resistor.

In order to realize the purpose above, another embodiment of the invention provides another paper discharging device, including: a detection resistor for enabling the printer to acquire the identification signal after the printer is connected, so that the printer may judge the type of the paper discharging device according to the identification signal.

Furthermore, the paper discharging device further includes: a reference resistor, a power supply connected to the first end of the reference resistor, and a conversion element, wherein the first end of the detection resistor is connected to the second end of the reference resistor, and the second end of the detection resistor is grounded; the first end of the conversion element is connected to a node between the reference resistor and the detection resistor and is configured to detect the voltage value of the node; the second end of the conversion element is configured to output the identification signal corresponding to the voltage value to the printer, so that the printer may judge the type of the paper discharging device according to the identification signal, wherein different paper discharging device type corresponds to different identification signal.

Furthermore, the conversion element is an Analog/Digital (A/D) converter or a voltage comparator.

In order to realize the purpose above, another embodiment of the invention provides a printing system, including a paper discharging device and a printer configured to acquire an identification signal when the paper discharging device is connected and judge a type of the paper discharging device according to the identification signal, wherein the identification signal is the signal corresponding to the paper discharging device, wherein different paper discharging device corresponds to different identification signal, and the corresponding relations between a plurality of identification signals and a plurality of paper discharging devices are stored in the printer.

Furthermore, the printer is configured to receive the identification signal, wherein the identification signal is the signal from the paper discharging device, and different paper discharging device may output different identification signal, or the printer is configured to detect the paper discharging device to generate the identification signal, wherein the identification signals generated by detecting different paper discharging devices by the printer are different.

Furthermore, the paper discharging device is configured to detect the parameter and output the identification signal correspond to the parameter, wherein different paper discharging device may output different identification signal.

Furthermore, the corresponding relations between a plurality of identification signals and a plurality of paper discharging devices are stored in the printer, and the printer is configured to search the paper discharging device type corresponding to the identification signal to determine the type of the paper discharging device.

Furthermore, the printer is further configured to execute the printer control program corresponding to the type of the paper discharging device, wherein the corresponding relation between the type of the paper discharging device and the printer control program is stored in the printer.

In order to realize the purpose above, another embodiment of the invention provides another printing system, including: a paper discharging device and a printer, wherein the paper discharging device includes a detection resistor; one end of the detection resistor is grounded; the printer includes a power supply, a reference resistor and a conversion element, wherein the first end of the reference resistor is connected to the other end of the detection resistor, and the second end of the reference resistor is connected to the power supply; the first end of the conversion element is connected to a node between the reference resistor and the detection resistor and is configured to detect the voltage value of the node; the second end of the conversion element is configured to output the identification signal corresponding to the voltage value to the printer, so that the printer may judge the type of the paper discharging device according to the identification signal, wherein different paper discharging device type corresponds to different identification signal.

Furthermore, the conversion element is an Analog/Digital (A/D) converter or a voltage comparator.

According to the invention, the printer firstly acquires the identification signal corresponding to the paper discharging device and then judges the type of the paper discharging device according to the acquired identification signal, so that the printer may automatically identify the type of the paper discharging device, and the problem that the printer may not automatically identify the type of the paper discharging device in the relevant technology is solved.

### Brief description of the drawings

The drawings constituting a part of the invention are used to supply a further understanding of the invention, and schematic embodiments and an instruction of the invention are used to explain the invention, but do not constitute an improper limitation to the invention. In the drawings:
Fig. 1 shows a diagram of a printing system provided in the embodiment of the invention;
Fig. 2 shows a block diagram of the printing system provided in the first embodiment of the invention;
Fig. 3 shows a circuit diagram of a detection unit of a paper discharging device provided in the first embodiment of the invention;
Fig. 4 shows a diagram of the paper discharging device provided in the second embodiment of the invention;
Fig. 5 shows a diagram of the printer provided in the first embodiment of the invention;
Fig. 6 shows a diagram of the printer provided in the second embodiment of the invention;
Fig. 7 shows a system block diagram of the printing system provided in the second embodiment of the invention;
Fig. 8 shows a circuit diagram which the detection unit of the paper discharging device of the printing system is connected with the printer provided in the second embodiment of the invention;
Fig. 9 shows a circuit diagram of the detection unit of the paper discharging device provided in the third embodiment of the invention;
Fig. 10 shows a structural diagram of the paper discharging device provided in one embodiment of the invention;
Fig. 11 shows a structural diagram of the paper discharging device provided in another embodiment of the invention;
Fig. 12 shows a flow chart of the method for identifying the paper discharging device provided in the first embodiment of the invention;
Fig. 13 shows a flow chart of the method for identifying the paper discharging device provided in the second embodiment of the invention; and
Fig. 14 shows a flow chart of the method for identifying the paper discharging device provided in the third embodiment of the invention.

### Detailed description of the embodiments

It should be noted that under a condition of no conflict, the embodiments of the invention and features in the embodiments may be combined together. The invention is further elaborated below in combination with the drawings and the embodiments in detail.

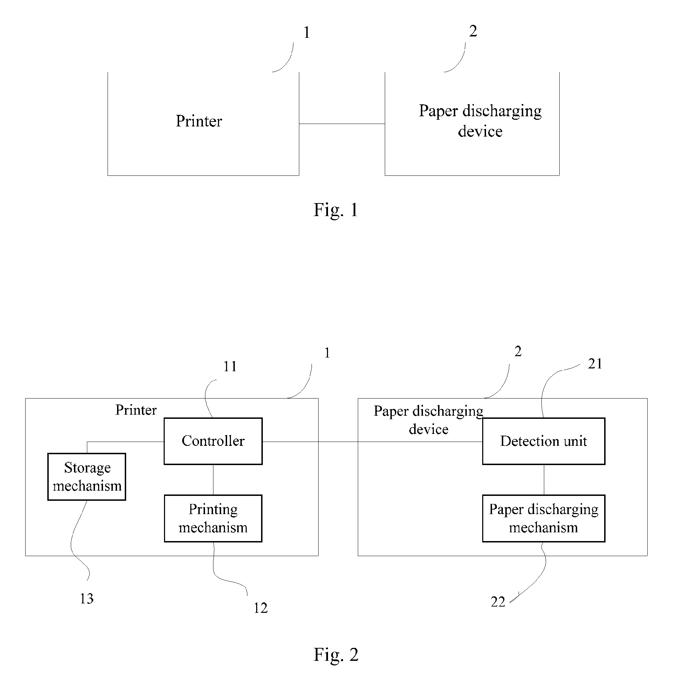

Fig. 1 shows a diagram of a printing system provided in the embodiment of the invention.

As shown in Fig. 1, the printing system includes a printer 1 and a paper discharging device 2.

The printer 1 may automatically detect the type of the paper discharging device 2 when the printer 1 is connected with the paper discharging device 2. For example, when being connected with the paper discharging device 2, the printer 1 acquires an identification signal and judges the type of the paper discharging device corresponding to the identification signal, wherein when the printing system adopts different paper discharging devices, different paper discharging device respectively corresponds different identification signal.

The printer 1 may acquire the identification signal by the following modes:
Mode I: the printer 1 receives the identification signal from the paper discharging device 2, wherein different paper discharging device may output different identification signal.
Mode II: the printer 1 detects the paper discharging device 2 to generate the identification signal, wherein the identification signals generated by detecting different paper discharging devices by the printer are different.

In the above printing system, different paper discharging device respectively corresponds different identification signal, so that after acquiring the identification signal, the printer searches the paper discharging device type corresponding to the identification signal according to the pre-stored corresponding relation between the identification signal and the paper discharging device type, so as to determine the type of the current connected paper discharging device. Due to the embodiment, the printer may automatically identify the type of the paper discharging device connected therewith.

Fig. 2 shows a system block diagram of the printing system provided in the first embodiment of the invention. The embodiment may be used as a preferred embodiment of the printing system shown in Fig. 1. As shown in Fig. 2, the printer 1 includes a controller 11, and a printing mechanism 12 and a storage mechanism 13 which are electrically connected with the controller 11, wherein the controller 11 includes a Central Processing Unit (CPU) configured to receive an instruction sent by an external control device (such as a computer) and control the printing mechanism 12 to execute printing operation according to the instruction; the CPU is further configured to receive the identification signal output by the paper discharging device, judge the type of the paper discharging device 2 according to the identification signal and call the corresponding printer control program; the printing mechanism 12 is configured to print preset images or characters on printing paper, and may be a thermal or thermal transferring printing mechanism or a impact dot printing mechanism, an ink jetting printing mechanism, a laser printing mechanism and the like; the storage mechanism 13 is a nonvolatile memory and is configured to store the corresponding relation between the identification signal output by the paper discharging device 2 and the type of the paper discharging device 2 as well as various printer control programs corresponding to different paper discharging devices.

Table 1 shows a corresponding relation table for the identification signal output by the paper discharging device 2 and the type of the paper discharging device, and the identification signal is in a data form, wherein when the paper discharging device 2 is a first paper discharging device, the identification signal is M1; when the paper discharging device 2 is a second paper discharging device, the identification signal is M2, and by parity of reasoning, when the paper discharging device 2 is an nth paper discharging device, the identification signal is Mn, wherein M1, M2, ..., and Mn are different.

**Table 1**

| Type of the paper discharging device | Identification signal |
|---|---|
| The first paper discharging device | M1 |
| The second paper discharging device | M2 |
| ··· | ··· |
| ··· | ··· |
| The nth paper discharging device | Mn |

The paper discharging device 2 includes a detection unit 21 and a paper discharging mechanism 22, wherein the detection unit 21 is configured to output the identification signal for identifying the type of the paper discharging device to the controller 11 of the printer 1; the paper discharging mechanism 22 is configured to receive the printing paper output by the printing mechanism 12 of the printer 1 and collect or discharge the printing paper according to a set requirement. During working, the paper discharging device 2 is mechanically and electrically connected with the printer 1, wherein a frame of the paper discharging device 2 is fixedly connected with a frame of the printer 1; the paper discharging device 2 is positioned at the downstream of the printing mechanism 12 of the printer 1 along a printing paper conveying direction, and a paper inlet of the paper discharging mechanism 22 is connected with a paper outlet of the printing mechanism 12; the detection unit 21 is electrically connected with the controller 11 of the printer 1 through a connection wire. The detection unit 21 includes a printed circuit board and components welded on the printed circuit board, and the printed circuit board is fixedly connected with the frame of the paper discharging mechanism 22.

As a part of the printing system, the embodiment of the invention further provides a paper discharging device.

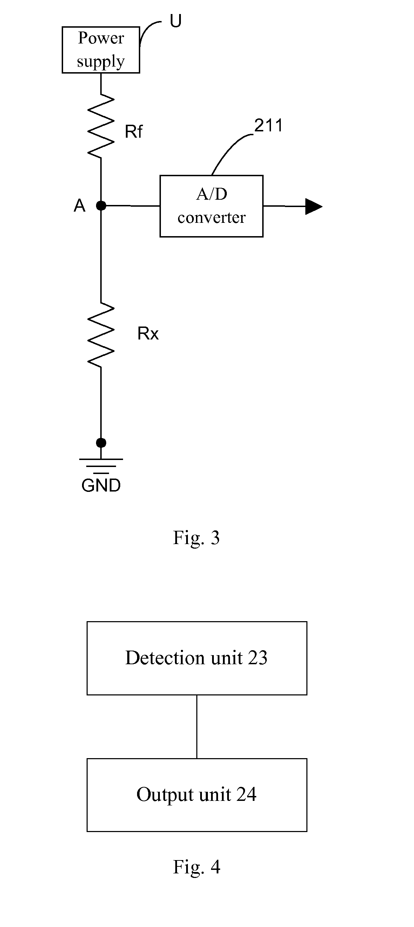

Fig. 3 shows a circuit diagram of a detection unit of the paper discharging device provided in the first embodiment of the invention. As shown in Fig. 3, the detection unit 21 includes a reference resistor Rf, a detection resistor Rx, a conversion element and a power supply U, wherein one end of the reference resistor Rf is connected in series with one end of the detection resistor Rx, and the other end of the reference resistor Rf is connected with the power supply U; the other end of the detection resistor Rx is grounded; the resistance value of the detection resistor Rx is set according to the type of the paper discharging device 2; the first end of the conversion element is connected to a node A between the reference resistor Rf and the detection resistor Rx and is configured to detect the voltage value of the node A, and the other end of the conversion element is electrically connected with the controller 11 of the printer 1 and is configured to convert the voltage value of the detection resistor Rx into the identification signal and output the identification signal to the controller 11 of the printer 1.

The voltage value Ux of the node A is determined by the resistance value of the detection resistor Rx, namely Ux=U*Rx/(Rx+Rf), and the AD converter 211 converts the voltage value Ux of the node A into an identification signal and outputs the identification signal, and the output identification signal and the resistance value of the detection resistor Rx has a corresponding relation. Therefore, the resistance value of the detection resistor Rx is set according to the type of the paper discharging device 2, and the identification signal corresponding to the type of the paper discharging device may be output. The controller 11 of the printer 1 may determine the type of the paper discharging device according to the identification signal, and call the corresponding printer control program. The conversion element in the embodiment is the A/D converter configured to convert an analog signal of the voltage value of the detection resistor Rx into a digital signal, namely the identification signal, and output the identification signal to the controller 11 of the printer 1.

Table 2 shows the corresponding relations of the resistance values of the detection resistors Rx of the paper discharging device from one to eight, the voltage value of the node A and the identification signals (i.e. the AD value) are obtained by calculation by taking the reference resistance value Rf=10KΩ, the detection power U=3.3V and the type of the paper discharging device n=8 for example.

**Table 2**

| Name of paper discharging device | Rx (KΩ) | Ux (V) | AD value |
|---|---|---|---|
| No paper discharging device | 0 | 0 | 0 |
| First paper discharging device | 1.38 | 0.4+/-Δ(t1) | 32+/-Δ(t2) |
| Second paper discharging device | 3.2 | 0.8+/-Δ(t1) | 64+/-Δ(t2) |
| Third paper discharging device | 5.71 | 1.2+/-Δ(t1) | 96+/-Δ(t2) |
| Fourth paper discharging device | 9.41 | 1.6+/-Δ(t1) | 128+/-Δ(t2) |
| Fifth paper discharging device | 15.39 | 2.0+/-Δ(t1) | 160+/-Δ(t2) |
| Sixth paper discharging device | 26.67 | 2.4+/-Δ(t1) | 192+/-Δ(t2) |
| Seventh paper discharging device | 56 | 2.8+/-Δ(t1) | 224+/-Δ(t2) |
| Eighth paper discharging element | 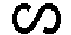 | 3.3 | 255 |

According to the table, the resistance values of the reference resistors Rf and the detection resistors Rx have precision errors, so that the error value Δ(t1) of the voltage value Ux of the node A and the error value Δ(t2) of the identification signal are set so as to meet the requirements of actual application. Due to calculation, when the precisions of the reference resistors Rf and the detection resistors Rx are 1%, the error value Δ(t1) of the voltage value of the detection resistor Rx is 0.1V, and the error value Δ(t2) of the identification signal output by the A/D converter is 8.

After the paper discharging device 2 is mechanically and electrically connected with the printer 1, the controller 11 of the printer 1 receives the identification signal output by the detection unit 21 of the paper discharging device 2, and compares the identification signal with the corresponding relation, which is stored in the storage mechanism 13, between the identification signal and the type of the paper discharging device to determine the type of the paper discharging device 2, and then the corresponding printing control program is called according to the type of the paper discharging device 2.

The paper discharging device provided in the embodiment includes a detection unit (for example, the detection unit which is shown in Fig. 3). The detection unit may output the identification signal corresponding to the type of the paper discharging device. After the paper discharging device is connected with the printer, the controller of the printer receives the identification signal output by the detection unit of the paper discharging device, determines the type of the paper discharging device according to the identification signal, and execute the corresponding printer control program. Therefore, when being connected with the printer, the paper discharging device provided in the embodiment of the invention may enable the printer to automatically identify the type of the paper discharging device, and the automation degree of equipment is increased.

It should be noted that in the paper discharging devices provided in other embodiments of the invention, if there are two or less than two types of the paper discharging devices suitable for the printer, the conversion element may be the voltage comparator; at the moment, the detection resistors Rx may select the first set resistance value or the second set resistance value, and the voltage comparator may convert the voltage value Ux of the node A into two identification signals at a high level or a low level and output the two identification signals; the controller 11 of the printer receives the identification signals and may determine the type of the paper discharging device 2 according to the identification signal. The price of the voltage comparator is low, so that the cost of the paper discharging device is reduced. The voltage comparator and the A/D converter are only embodiments of the conversion element, and those skilled in the field can consider other conversion elements.

Fig. 4 shows a diagram of the paper discharging device provided in the second embodiment of the invention. As shown in Fig. 4, the paper discharging device includes a detection unit 23 and an output unit 24.

The detection unit 23 is configured to detect its own parameter.

The output unit 24 is configured to output the identification signal corresponding to the parameter. After the identification signal is output to the printer, the printer may judge the type of the paper discharging device according to the received identification signal, wherein different paper discharging device corresponds to different identification signal.

As a selectable implementation mode for detecting the parameter, the detection unit 23 may arrange the detection resistors with different resistance values in different paper discharging devices and detect the parameter by detecting the values of the detection resistors, and at the moment, the output unit 24 outputs the identification signals corresponding to the resistance values of the detection resistors.

Different embodiments of the paper discharging devices provided in the invention, such as the first embodiment and the second embodiment may be combined.

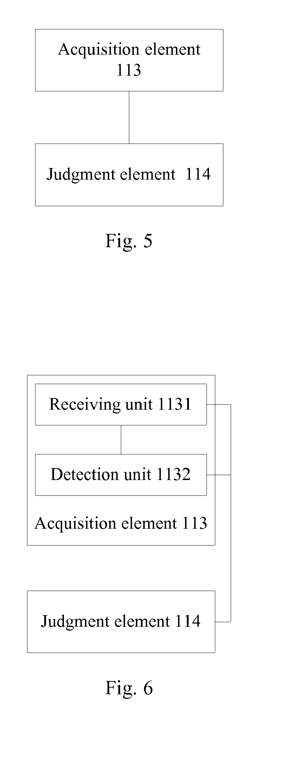

Fig. 5 shows a diagram of the printer provided in the first embodiment of the invention. As shown in Fig. 5, the printer includes an acquisition element 113 and a judgment element 114.

The acquisition element 113 is configured to acquire the identification signal, wherein the identification signal is a signal corresponding to the paper discharging device, wherein different paper discharging device corresponds to different identification signal. The identification signal acquired by the acquisition element 113 may either be from the identification signal output by the paper discharging device or the identification signal generated by detecting the paper discharging device by the printer.

The judgment element 114 is configured to judge the type of the paper discharging device according to the identification signal, wherein the corresponding relation between the identification signal and the type of the paper discharging device is stored in the printer.

Fig. 6 shows a diagram of the printer provided in the second embodiment of the invention. Compared with the printer provided in the first embodiment, the printer includes the acquisition element 113 and the judgment element 114, wherein the acquisition element 113 further includes a receiving unit 1131 and/or a detection unit 1132.

The receiving unit 1131 is configured to receive the identification signal, wherein the identification signal is the signal from the paper discharging device, and different paper discharging device may output different identification signal.

The detection unit 1132 is configured to detect the paper discharging device so as to generate the identification signal, wherein the identification signals generated by detecting different paper discharging devices by the printer are different.

The acquisition element 113 may simultaneously include the receiving unit 1131 and the detection unit 1132 or include one of the receiving unit 1131 and the detection unit 1132.

The corresponding relations between a plurality of identification signals and a plurality of paper discharging devices may be pre-stored in the printer, and the judgment element 114 may determine the type of the paper discharging device by searching the paper discharging device type corresponding to the identification signal.

The printer further includes an execution element configured to execute the printer control program corresponding to the type of the paper discharging device, wherein the corresponding relation between the type of the paper discharging device and the printer control program is stored in the printer.

Different embodiments of the printers provided in the invention, such as the first embodiment and the second embodiment, may be combined with one another.

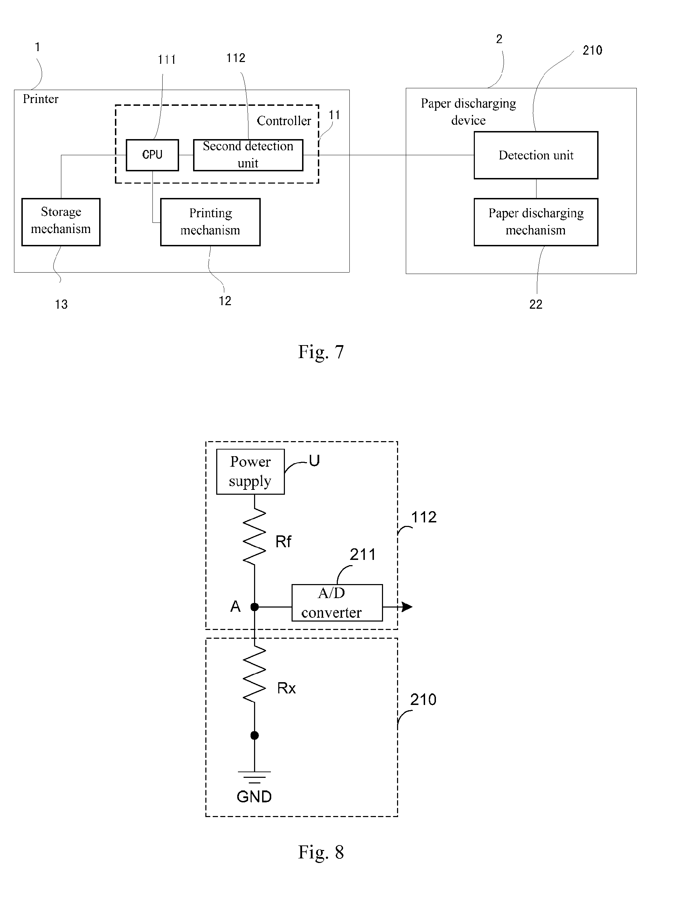

Fig. 7 shows a system block diagram of the printing system provided in the second embodiment of the invention, and Fig. 8 shows a circuit diagram in which the detection unit of the paper discharging device in the second embodiment of the printer provided in the invention is connected with the printer. As shown, in the embodiment, the controller 11 of the printer 1 includes a CPU 111 and a second detection unit 112 electrically connected with the CPU 111. The second detection unit 112 includes a reference resistor Rf, an A/D converter and a power supply U, wherein one end of the reference resistor Rf is connected with the power supply U, and the other end of the reference resistor Rf is connected with one end of the A/D converter; the other end of the A/D converter is electrically connected with the CPU 111; the detection unit 210 of the paper discharging device 2 includes the detection resistor Rx, and the resistance value of the detection resistor Rx is set according to the type of the paper discharging device 2. After the detection unit 210 of the paper discharging device 2 is electrically connected with the controller 11 of the printer 1, the reference resistor Rf is connected in series with the detection resistor Rx; one end (i.e. the node A), which is connected with the reference resistor Rf, of the A/D converter is positioned between the reference resistor Rf and the detection resistor Rx, so that the A/D converter may convert the analog signal of the voltage value of the detection resistor Rx into the digital signal, namely the identification signal, and output the digital signal to the CPU 111 of the printer 1.

Working principles of the paper discharging device 2 and the printer 1 in the embodiment are the same as those of the above embodiments, so that no unnecessary detail is provided.

In the embodiment, the detection unit 210 of the paper discharging device 2 only includes the detection resistor Rx, so that the circuit of the paper discharging device is simplified, and the cost of the paper discharging device is lowered.

It should be noted that in other embodiments of the paper discharging device provided in the invention, the detection resistor may be an adjustable resistor, and the set voltage value is obtained by adjusting the resistance value of the adjustable resistor, so that the A/D converter may output the obviously different AD values according to different types of the paper discharging devices, and the detection accuracy is improved.

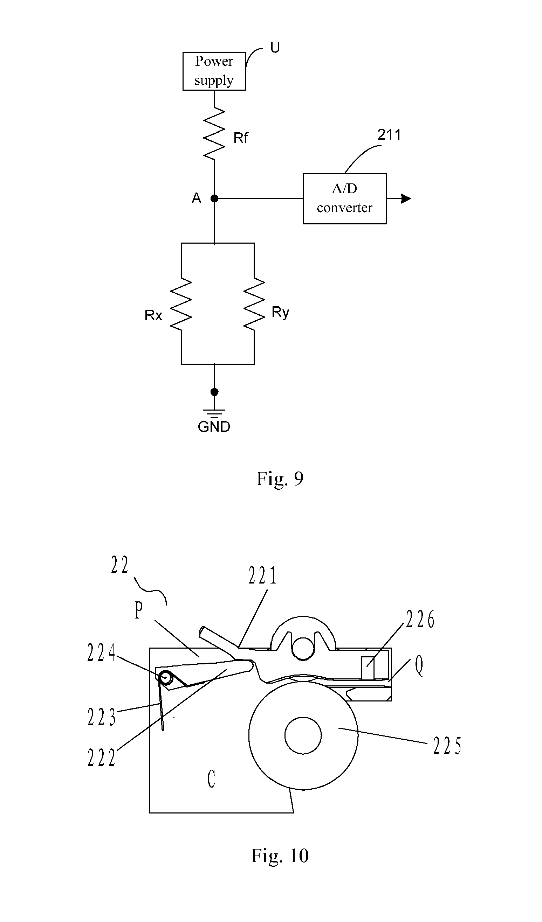

Fig. 9 shows a circuit diagram of the detection unit of the paper discharging device provided in the third embodiment of the invention. In the embodiment, the detection unit 21 further includes a second detection resistor Ry which is connected in parallel with the detection resistor Rx so as to form a parallel voltage division circuit, and the A/D converter detects the voltage value of the parallel voltage division circuit. According to the embodiment, the detection resistor Rx and the second detection resistor Ry which have different resistance values are selected to obtain the set resistance value, so that the A/D converter may output the obviously different AD values according to different types of the paper discharging devices, and the detection accuracy is improved.

Fig. 10 shows a structure diagram of the paper discharging device provided in one embodiment of the invention. According to the embodiment, the paper discharging device is a PRE module. As shown in Fig. 10, the PRE module includes a fixed passage plate 221, a movable passage plate 222, an elastic element 223, a conveying roller component 225, a sensor 226 and the detection unit (which is not shown in the drawing).

Wherein, a paper feeding passage for the printing paper is formed between the fixed passage plate 221 and the movable passage plate 222. The movable passage plate 222 is pivoted to the frame through a pivot shaft 224, it may rotate around the pivot shaft 224 and is inserted into or separated from the fixed passage plate 221; when the movable passage plate 222 is inserted into the fixed passage plate 221, a paper containing opening is formed between the movable passage plate 222 and the conveying roller component 225; one end of the elastic element 223 is connected with the movable passage plate 222, and the other end of the elastic element 223 is connected with the frame; under the action of the elastic element 223, the movable passage plate 222 always has a motion tendency for rotating toward the fixed passage plate 221 and being inserted into the fixed passage plate 221; the conveying roller component 225 is positioned at the downstream of the paper feeding passage along a printing paper forwarding direction; one side of the conveying roller component 225 is connected with a paper outlet of the paper feeding passage, and the other side of the conveying roller component 225 is connected with an outlet Q and is configured to convey the printing paper; the sensor 226 is positioned at the outlet Q and is configured to detect whether the printing paper exists at the outlet Q.

The frame of the PRE module is fixedly connected with the frame of the printer, and a paper inlet of the paper feeding passage of the PRE module is connected with a paper outlet of the printing mechanism of the printer; the detection unit of the PRE module is electrically connected with the controller of the printer through a connection wire. After the printer is powered on, the controller of the printer firstly receives the identification signal output by the detection unit of the PRE module, determines that the paper discharging device is the PRE according to the identification signal, calls a control program of the PRE module and controls the printer to work according to the control program. In a printing process, when the printing paper is conveyed to the conveying roller component, the controller of the printer controls the conveying roller component 225 to clamp the end part of the printing paper and then to stop rotating, and the printing paper pushes the movable passage plate 222 to rotate; the printing paper is temporarily stored in a paper containing space C in a U-shaped. After printing is finished, the controller of the printer controls the conveying roller component 225 to drive the printing paper to be discharged out of the outlet Q and to clamp a tail of the printing paper and then stop rotating, and await a user to take away the printing paper; after a set time for waiting, the sensor 226 detects that the printing paper exist at the outlet Q, i.e. the printing paper is not taken away, the controller of the printer controls the conveying roller component 225 to rotate along a paper withdrawing direction to drive the printing paper to enter the paper containing space C through the paper containing opening.

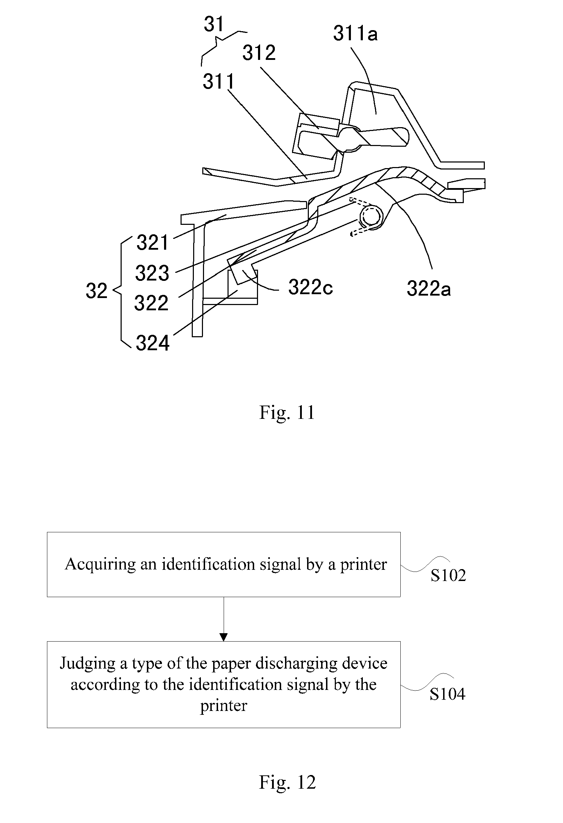

Fig. 11 shows a structure diagram of the paper discharging device provided in another embodiment of the invention. According to the embodiment, the paper discharging device is a paper blocking detection element. As shown in Fig. 11, the paper blocking detection element includes a paper plugging detection mechanism 31 and a paper pulling detection mechanism 32 which are arranged oppositely, and the detection unit (which is not shown in the drawing).

Wherein, the paper plugging detection mechanism 31 includes a first passage plate 311 and a first sensor 312. The first passage plate 311 is set to be shaped like a Ω-shaped, so that a protruded paper containing part 311a is formed. The first sensor 312 is fixed on the paper containing part 311a and is configured to detect whether paper exists in the paper containing part 311 a.

The paper pulling detection mechanism 32 includes a second passage plate 321, a floating plate 322, an elastic element 323 and a second sensor 324. The floating plate 322 is pivoted to the second passage plate 321 through a rotating shaft. The detection surface 322a of the floating plate 322 penetrates an opening (which is not shown in the figure) on the second passage plate 321 and is protruded from the surface of the second passage plate 321. One end of the elastic element 323 is connected with the floating plate 322, and the other end of the elastic element 323 is connected with the second passage plate 321, and the floating plate 322 always has a tendency for closing to the second passage plate 321 under elasticity of the elastic element 323. The second sensor 324 is fixedly connected with the second passage plate 321 and is matched with a detection piece 322c on the floating plate 322 so as to detect a change of the position of the floating plate 322.

The first passage plate 311 of the paper plugging detection mechanism 31 and the second passage plate 321 of the paper pulling detection mechanism 32 are oppositely arranged, and a printing paper conveying passage is formed between the first passage plate 311 and the second passage plate 321.

A frame of the paper blocking detection element is fixedly connected with the frame of the printer; the paper inlet of the printing paper conveying passage of the paper blocking detection element is connected with the paper outlet of the printing mechanism of the printer; the detection unit of the paper blocking detection element is electrically connected with the controller of the printer through the connection wire. After the printer is powered on, the controller of the printer firstly receives an identification signal output by the detection unit of the paper blocking detection element and determines that the paper discharging device is the paper blocking detection element according to the identification signal; the printer calls the paper blocking detection element control program and is controlled to work according to the paper blocking detection element control program. When the printing paper is blocked in a conveying process, it is accumulated in the paper containing part 311a to form a bulge; when detecting the printing paper, the first sensor 312 outputs a paper blocking detection signal; after detecting the detection signal, the controller of the printer instructs an alarming device (such as a buzzer) of the printer to send out alarming information to remind a user that the paper is blocked; when being pulled in a paper discharging process, the printing paper is changed from a loose state into a tensioned state, and the tensioned paper presses the detection surface 322a of the floating plate 322, thereby enabling the floating plate 322 to overcome the elastic force of the elastic element 323 to rotate. When detecting the detection piece 322c, the second sensor 324 outputs a paper pulling detection signal; after detecting the paper pulling detection signal, the controller of the printer instructs the alarming device (such as the buzzer) to send out alarming information, thereby avoiding a paper blocking failure or paper waste caused by the fact that an operator pulls the paper.

The embodiment of the invention also provides a method for identifying the paper discharging device, which may be executed on the basis of the printing system provided in the embodiment of the invention, or executed on the basis of the paper discharging device or the printer provided in the embodiment of the invention, thereby the characteristics in the method for identifying the paper discharging device, which is provided in the embodiment of the invention, may be combined with the printing system, the paper discharging device or the printer, and the characteristics of the printing system, the paper discharging device or the printer may also be combined with the method for identifying the paper discharging device, which is provided in the embodiment of the invention. The method for identifying the paper discharging device, which is provided in the embodiment of the invention, is introduced below.

Fig. 12 shows a flow chart of the first embodiment of the method for identifying the paper discharging device provided in the invention. As shown in Fig. 12, the method for identifying the paper discharging device includes:
Step 102: acquiring an identification signal by a printer, wherein the identification signal is a signal corresponding to a paper discharging device, wherein different paper discharging device corresponds to different identification signal.
Step 104: judging a type of the paper discharging device by the printer, wherein the corresponding relation between the identification signal and the type of the paper discharging device is stored in the printer.

The printer may acquire the identification signal by the modes below:
Mode I: the printer receives the identification signal which is from the paper discharging device, wherein different paper discharging device may output different identification signal.
Mode II: the printer detects the paper discharging device to generate the identification signal, wherein the identification signals generated by detecting different paper discharging devices by the printer are different.

When the printer acquires the identification signal by the mode I, before the printer receives the identification signal, the paper discharging device firstly detects its own parameter and outputs the identification signal corresponding to the parameter, wherein different paper discharging device outputs different identification signal.

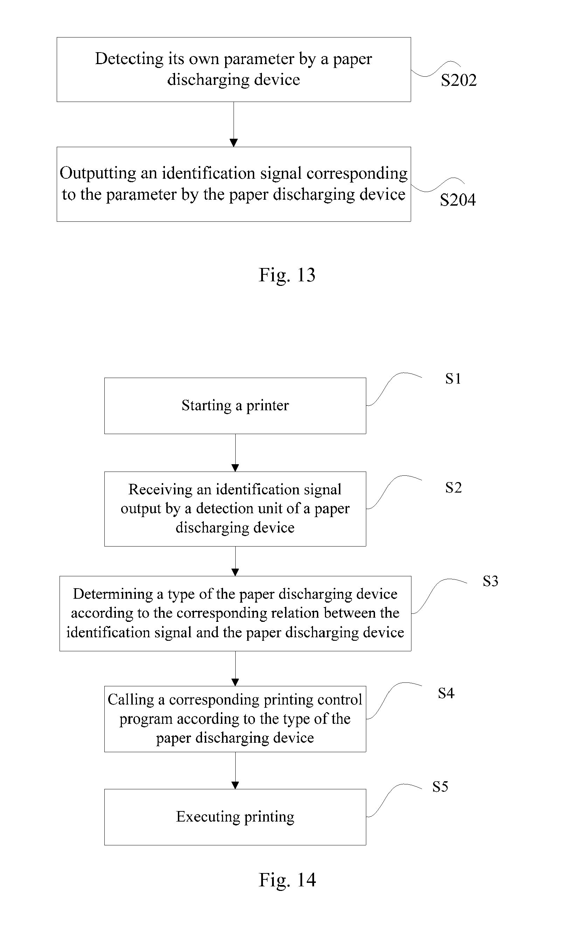

Fig. 13 shows a flow chart of the second embodiment of the method for identifying the paper discharging device provided in the invention. As shown, the method includes the following steps:
Step 202: detecting its own parameter by a paper discharging device.
Step 204: outputting an identification signal corresponding to the parameter to a printer by the paper discharging device, so that the printer judges a type of the paper discharging device according to the identification signal, wherein different paper discharging device corresponds to different identification signal.

A detection resistor may be arranged in the paper discharging device, and the paper discharging device detects the resistance value of the detection resistor to detect the parameter and outputs the identification signal corresponding to the resistance value of the detection resistor.

Fig. 14 shows a flow chart of the third embodiment of the method for identifying the paper discharging device provided in the invention. As shown, the method includes the following steps of:
Step 1: starting a printer

The printer is powered on.

Step 2: receiving an identification signal output by a detection unit of a paper discharging device

The controller 11 of the printer receives the identification signal output by the detection unit of the paper discharging device.

Step 3: determining a type of the paper discharging device according to the corresponding relation between the identification signal and the type of the paper discharging device

After acquiring the identification signal, the controller 11 determines the type of the paper discharging device according to the corresponding relation between the identification signal and the type of the paper discharging device, which is pre-stored in the storage mechanism 13.

Step 4: calling a corresponding printing control program according to the type of the paper discharging device

The controller 11 of the printer calls the corresponding printing control program according to the determined type of the paper discharging device. For example, if the paper discharging device installed in the current printer is the PRE module, the controller 11 of the printer calls the PRE module control program, starts initialization of the PRE module, detects the state of the PRE module and controls the PRE module to work in the printing process.

Step 5: executing printing

The controller 11 of the printer controls the printing mechanism and the paper discharging device to cooperatively execute a printing work.

According to the method for identifying the paper discharging device, which is provided in the embodiment of the invention, the printer acquires the identification signal, and the type of the paper discharging device is judged according to the identification signal and the corresponding relation between the identification signal and the type of the paper discharging device, which is stored in the printer, so that the printer may automatically identify the type of the paper discharging device. Furthermore, the method for identifying the paper discharging device is simple and reliable.

It is observed from the above description that when the paper discharging device provided in the embodiment of the invention is connected with the printer, the printer may automatically identify the type of the paper discharging device, and the automation degree of equipment is increased.

All the above is only the preferred embodiment of the invention and not intended to limit the scope of the invention. For those skilled in this field, the invention may have various corrections and changes. Any modifications, equivalent replacements, improvements and the like within the spirit and principle of the invention shall fall within the scope of the protection of the invention.

## Claims

1. A method for identifying a paper discharging device, comprising:
acquiring an identification signal by a printer, wherein the identification signal is a signal corresponding to the paper discharging device, and different paper discharging device corresponds to different identification signal; and
judging a type of the paper discharging device according to the identification signal by the printer, wherein the corresponding relation between the identification signal and the type of the paper discharging device is stored in the printer.

2. The method according to claim 1, wherein the step of acquiring the identification signal by the printer comprises:
receiving the identification signal by the printer, wherein the identification signal is a signal from the paper discharging device, and different paper discharging device may output different identification signal, or detecting the paper discharging device to generate the identification signal by the printer, wherein the identification signals generated by detecting different paper discharging devices by the printer are different.

3. The method according to claim 2, wherein before the printer receives the identification signal, further comprising:
detecting its own parameter and outputting the identification signal corresponding to the parameter by the paper discharging device, wherein different paper discharging device may output different identification signal.

4. The method according to claim 1, wherein the corresponding relations between a plurality of identification signals and a plurality of paper discharging devices are stored in the printer, and the step of judging the type of the paper discharging device according to the identification signal by the printer comprises:
searching the type of the paper discharging device corresponding to the identification signal by the printer to determine the type of the paper discharging device.

5. The method according to claim 1, wherein after the printer judges the type of the paper discharging device according to the identification signal, further comprising:
executing a printer control program corresponding to the type of the paper discharging device by the printer, wherein the corresponding relation between the type of the paper discharging device type and the printer control program is stored in the printer.

6. A method for identifying a paper discharging device, comprising:
detecting its own parameter by the paper discharging device; and
outputting an identification signal corresponding to the parameter to a printer by the paper discharging device, so that the printer judges a type of the paper discharging device according to the identification signal, wherein different paper discharging device corresponds to different identification signal.

7. The method according to claim 6, wherein a detection resistor is arranged in the paper discharging device, wherein
detecting the parameter by the paper discharging device comprises: detecting a resistance value of the detection resistor by the paper discharging device, wherein detection resistors with different resistance values are arranged in different types of the paper discharging devices;
outputting the identification signal corresponding to the parameter by the paper discharging device comprises: outputting the identification signal corresponding to the resistance value of the detection resistor by the paper discharging device.

8. A printer, comprising:
an acquisition element for acquiring an identification signal, wherein the identification signal is a signal corresponding to a paper discharging device, wherein different paper discharging device corresponds to different identification signal; and
a judgment element for judging a type of the paper discharging device according to the identification signal, wherein the corresponding relation between the identification signal and the type of the paper discharging device is stored in the printer.

9. The printer according to claim 8, wherein the acquisition element comprises:
a receiving unit for receiving the identification signal, wherein the identification signal is a signal from the paper discharging device, and different paper discharging device outputs different identification signal, or
a detection unit for detecting the paper discharging device to generate the identification signal, wherein the identification signals generated by detecting different paper discharging devices by the printer are different.

10. The printer according to claim 8, wherein the corresponding relations between a plurality of identification signals and a plurality of paper discharging device elements are stored in the printer and the judgment element is configured to search the paper discharging device type corresponding to the identification signal to determine the type of the paper discharging device.

11. The printer according to claim 8, further comprising:
an execution element for executing a printer control program corresponding to the type of the paper discharging device, wherein the corresponding relation between the type of the paper discharging device and the printer control program is stored in the printer.

12. A paper discharging device, comprising:
a detection unit for detecting its own parameter; and
an output unit for outputting an identification signal corresponding to the parameter to a printer, so that the printer judges a type of the paper discharging device according to the identification signal, wherein different paper discharging device corresponds to different identification signal.

13. The paper discharging device according to claim 12, wherein a detection resistor is arranged in the paper discharging device, wherein:
the detection unit is used for detecting a resistance value of the detection resistor, wherein detection resistors with different resistance values are arranged in different types of the paper discharging devices,
and the output unit is used for outputting the identification signal corresponding to the resistance value of the detection resistor.

14. A paper discharging device, comprising a detection resistor (Rx) for enabling a printer to acquire an identification signal after the printer is connected, so that the printer judges a type of the paper discharging device according to the identification signal.

15. The paper discharging device according to claim 14, further comprising:
a reference resistor (Rf);
a power supply connected to the first end of the reference resistor (Rf), wherein the first end of the detection resistor (Rx) is connected to the second end of the reference resistor (Rf), and the second end of the detection resistor (Rx) is grounded; and
a conversion element, wherein the first end of the conversion element is connected to a node (A) between the reference resistor (Rf) and the detection resistor (Rx) and is configured to detect the voltage value of the node (A), the second end of the conversion element is configured to output the identification signal corresponding to the voltage value to the printer, so that the printer judges the type of the paper discharging device according to the identification signal, wherein different paper discharging device corresponds to different identification signal.

16. The paper discharging device according to claim 15, wherein the conversion element is an Analog/Digital (A/D) converter (211) or a voltage comparator.

17. A printing system, comprising:
a paper discharging device; and
a printer configured to acquire an identification signal when the paper discharging device is connected and judge a type of the paper discharging device according to the identification signal, wherein the identification signal is a signal corresponding to the paper discharging device, wherein different paper discharging device corresponds to different identification signal, and the corresponding relations between a plurality of identification signals and a plurality of paper discharging devices are stored in the printer.

18. The printing system according to claim 17, wherein the printer is configured to receive the identification signal, wherein the identification signal is a signal from the paper discharging device, and different paper discharging device outputs different identification signal, or,
the printer is configured to detect the paper discharging device to generate the identification signal, wherein the identification signals generated by detecting different paper discharging devices by the printer are different.

19. The printing system according to claim 17, wherein the paper discharging device is configured to detect its own parameter and output the identification signal correspond to the parameter, wherein different paper discharging device outputs different identification signal.

20. The printing system according to claim 17, wherein the corresponding relations between a plurality of identification signals and a plurality of paper discharging devices are stored in the printer, and the printer is configured to search the paper discharging device type corresponding to the identification signal to determine the type of the paper discharging device.

21. The printing system according to claim 17, wherein the printer is further configured to execute a printer control program corresponding to the type of the paper discharging device, wherein the corresponding relation between the type of the paper discharging device and the printer control program is stored in the printer.

22. A printing system, comprising a paper discharging device and a printer,
wherein
the paper discharging device comprises a detection resistor (Rx), and one end of the detection resistor is grounded;
the printer comprises:
a power supply;
a reference resistor (Rf), the first end of which is connected to the other end of the detection resistor (Rx), and the second end of the reference resistor is connected to the power supply; and
a conversion element, the first end of the conversion element is connected to a node (A) between the reference resistor (Rf) and the detection resistor (Rx) and is configured to detect the voltage value of the node (A), the second end of the conversion element is configured to output an identification signal corresponding to the voltage value to the printer, so that the printer judges the type of the paper discharging device according to the identification signal, wherein different paper discharging device type corresponds to different identification signal.

23. The printing system according to claim 22, wherein the conversion element is an Analog/Digital (A/D) converter (211) or a voltage comparator.
